# EUROPEAN PATENT APPLICATION

(11) **EP 2 109 251 A1**
(43) Date of publication of application: **14.10.2009**
(21) Application number: 08706627.0
(22) Date of filing: 02.02.2008
(51) Int. Cl.: H04L 12/24

(54) **SERVICE TRACKING METHOD, NETWORK DEVICE, OPERATION&MAINTENANCE CONTROLLER, SERVICE REQUEST APPARATUS**

(30) Priority: 31.05.2007 CN 200710105300
(71) Applicant: Huawei Technologies Co., Ltd., Longgang District, Shenzhen Guangdong 518129 (CN)
(72) Inventor: MA, Qifeng, Shenzhen, Guangdong Province 518129 (CN); LIU, Jianfeng, Shenzhen, Guangdong Province 518129 (CN); XIAO, Yawen, Shenzhen, Guangdong Province 518129 (CN); SHI, Xiaomin, Shenzhen, Guangdong Province 518129 (CN); CHEN, Shan, Shenzhen, Guangdong Province 518129 (CN)
(74) Representative: Pfenning, Meinig & Partner GbR
(86) International application number: PCT/CN2008/070252
(87) International publication number: WO 2008/145028

(57) **Abstract**

A service tracking method comprises: after receiving the service tracking identification and the service request message, recording the interaction information of the service when the tracking determination unit determines the service is accordant; uploading the service tracking information to the uploading address included in the service tracking identification, the service tracking information including the interaction information. A network device, an operation & maintenance controller and a service request apparatus are also provided. The network device, the operation & maintenance controller and the service request apparatus can realize or assist to realize the service tracking method.

## Description

The present application claims the priority of Chinese Patent Application No. 200710105300.6, entitled "Service Tracking Method, Network Device, Operation & Maintenance Controller, Service Request Apparatus" and filed with the Chinese Patent Office on May 31, 2007, the contents of which are incorporated herein by reference in its entirety.

### Field of the Invention

The present invention relates to the field of telecommunication technology, and in particular, to a method, a network device, an operation and maintenance (O&M) controller, and a service requesting device for service tracking.

### Background of the Invention

With the rapid development of telecommunication industry, the competition in the telecommunication industry becomes more and more fierce. In addition to technical advantages, customer satisfaction becomes more and more important in the competition. Customer satisfaction has an influence on customer loyalty, and consequently, the maintenance and growth of customer groups as well as the survival and thriving of companies. The speed at which customer's complaints about the service or application failures are handled is closely related to customer satisfaction. Therefore, a system must have satisfactory service tracking and trouble locating capability.

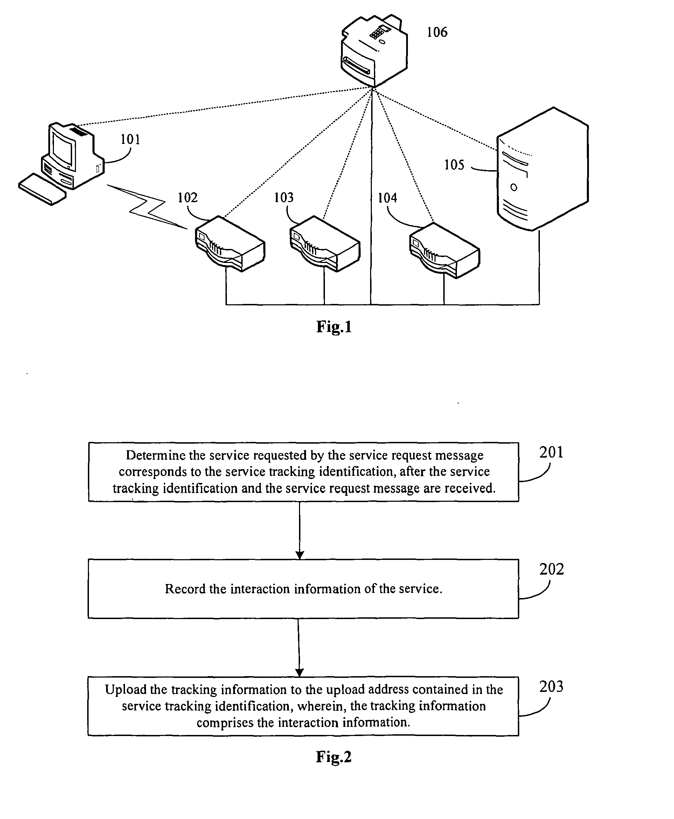

An operation and maintenance (O&M) system is a system with service tracking capability. Fig.1 shows a schematic network diagram of an O&M system in the prior art, mainly comprising: service requesting device 101, which is an intelligent terminal with computation, storage, and network access capability, for example, a personal computer; network device 102, network device 103, and network device 104, which may be logic entities that achieve specific functions, such as routers; service providing device 105, which is mainly configured to provide services to the service requesting device; O&M controller 106, which is a main device that implements service tracking in the O&M system and stores essential information of the network devices, such as IP address, operating system type, name, location, other descriptive information, etc. In this system, the service providing device may communicate with the network devices in a wired or wireless manner, and network devices usually communicate with the O&M controller via TCP/IP protocol.

An existing service tracking process comprises three stages: service tracking task issuing stage, service tracking and information reporting stage, and service tracking termination stage. Assuming that the devices involved in a service's interaction process include a service requesting device, network device 1, network device , network device , and a service providing device, a service tracking method that utilizes the O&M system shown in Fig.1 will be described below.

At the service tracking task issuing stage, maintenance personnel sets tracking commands on the O&M controller, the O&M controller sets service tracking tasks for various network devices and issues tracking conditions to the network devices, and the network devices set the tracking tasks according to the received tracking conditions. As the O&M controller has stored therein essential information of the network devices, and thus knows which network devices are responsible for routing a service when there is a need to track the service. Therefore, the O&M controller may configure service tracking tasks for the network devices and issue the tasks to the network devices.

At the service tracking and service reporting stage, the service requesting device initiates a device request, and all network devices related to the service handle the tasks configured by the O&M controller. The information about interactions between the network devices as well as between the network devices and the service requesting device is recorded, so as to track the entire service interaction process. All the service tracking information is reported to the O&M controller. The maintenance personnel may analyze the exception of the service handling process using the service tracking information reported to the O&M controller.

At this stage, the service requesting device may send the service request information in the same procedure for multiple times. In this way, the O&M controller may keep track of the entire service interaction process between the service requesting device and the service providing device.

At the service tracking termination stage, after obtaining required service tracking information, the maintenance personnel stops tracking. The O&M controller issues commands to the network devices to cancel the tracking tasks. When the network devices receive the commands, they stop the service tracking, thereby accomplishing the service tracking for a service requested by the service requesting device.

In achieving the present invention, the inventor found the existing service tracking method has at least the following disadvantages: as a result of centralized control, the O&M controller has to sequentially notify the corresponding network devices when initiating and terminating the tracking, thereby making the control operations complex. Furthermore, the network devices can only return service tracking information fixedly to the O&M controller.

### Summary of the Invention

Embodiments of the present invention provide a service tracking method, a network device, an O&M controller, and a service requesting device, for setting an address where service tracking information is to be uploaded from a network device according to a service tracking identification and uploading the service tracking information to the address, thereby achieving improved flexibility of service tracking.

Embodiments of the present invention provide a service tracking method, comprising:

after receiving a service tracking identification and a service request message, judging whether the service identified by the service tracking identification corresponds to the service requested by the service request message;

recording interaction information of the service identified by the service tracking identification, if the service identified by the service tracking identification corresponds to the service requested by the service request message; and

sending service tracking information to an upload address contained in the service tracking identification, the service tracking information containing the interaction information.

Embodiments of the present invention provide an O&M controller, comprising:

a service tracking identification generating unit, configured to generate a service tracking identification containing an upload address; and

a service tracking identification sending unit, configured to send the service tracking identification.

Embodiments of the present invention further provide a service requesting device, comprising:

a service tracking identification obtaining unit, configured to receive a service tracking identification from the O&M controller or generate a service tracking identification, the service tracking identification containing an upload address; and

a service tracking identification sending unit, configured to send the service tracking identification to the upload address.

Embodiments of the present invention provide a network device, comprising:

an information receiving unit, configured to receive a service tracking identification and a service request message;

a tracking judging unit, configured to judge whether the service identified by the service tracking identification corresponds to the service requested by the service request message;

an information recording unit, configured to record interaction information of the service, if the tracking judging unit judges that the service identified by the service tracking identification corresponds to the service requested by the service request message; and

a service tracking information reporting unit, configured to upload the service tracking information to the upload address contained in the service tracking identification, if the tracking judging unit judges that the service identified by the service tracking identification corresponds to the service requested by the service request message, the service tracking information containing the interaction information.

Embodiments of the present invention provide a service tracking system, comprising:

a service requesting device, configured to obtain a service tracking identification, generate a service request message, and send the service tracking identification and the service request message; and

a network device, configured to receive the service tracking identification and the service request message, record interaction information of the service if the tracking judging unit judges that the service identified by the service tracking identification corresponds to the service requested by the service request message, and upload the service tracking information to an upload address contained in the service tracking identification, the service tracking information containing the interaction information.

Embodiments of the present invention further provide another service tracking system, comprising:

an operation and maintenance (O&M) controller, configured to generate and send a service tracking identification;

a service requesting device, configured to generate and send a service request message; and

a network device, configured to receive the service tracking identification and the service request message, record interaction information of the service if the tracking judging unit judges that the service identified by the service tracking identification corresponds to the service requested by the service request message, and upload the service tracking information to an upload address contained in the service tracking identification, the service tracking information containing the interaction information.

It is apparent from the above technical solution that, due to the added service tracking identification, operation and maintenance can be performed by network devices according to a service tracking identification without sequentially issuing any control command to corresponding network devices, thereby simplifying control operations and improving the response ability of the system. As the address where service tracking information is to be uploaded is contained in the service tracking identification, the service tracking information may be uploaded to the address contained in the service tracking identification after the service tracking information has been obtained. In addition, as the address where service tracking information is to be uploaded may be set according to the condition of service tracking, the service tracking information may be uploaded not only to the O&M controller, thereby improving the flexibility in service tracking, enabling the service tracking information to be managed in a distributed manner and facilitating trouble location and detection.

### Brief Description of the Drawings

Fig.1 is a schematic diagram illustrating the networking of O&M system in prior art;

Fig.2 is a flow diagram of a service updating method according to a first embodiment of the present invention;

Fig.3 is a flow diagram of a service updating method according to a second embodiment of the present invention;

Fig.4 is a flow diagram of a service updating method according to a third embodiment of the present invention;

Fig.5 is a flow diagram of a service updating method according to a fourth embodiment of the present invention;

Fig.6 is a signaling flow diagram of a service updating method according to a fifth embodiment of the present invention;

Fig.7 is a signaling flow diagram of a service updating method according to a sixth embodiment of the present invention;

Fig.8 is a structural representation of an O&M controller according to an embodiment of the present invention;

Fig.9 is a structural representation of an O&M controller according to an embodiment of the present invention;

Fig.10 is a structural representation of an O&M controller according to an embodiment of the present invention;

Fig.11 is a structural representation of a service requesting device according to an embodiment of the present invention;

Fig. 12 is a structural representation of a service requesting device according to an embodiment of the present invention;

Fig.13 is a structural representation of a network device according to an embodiment of the present invention;

Fig.14 is a structural representation of a network device according to an embodiment of the present invention;

Fig.15 is a structural representation of a network device according to an embodiment of the present invention;

Fig.16 is a structural representation of a network device according to an embodiment of the present invention;

Fig.17 is a structural representation of a network device according to an embodiment of the present invention;

Fig.18 is a structural representation of a service tracking system according to an embodiment of the present invention;

Fig.19 is a structural representation of a service tracking system according to an embodiment of the present invention;

Fig.20 is a structural representation of a service tracking system according to an embodiment of the present invention; and

Fig.21 is a structural representation of a service tracking system according to an embodiment of the present invention.

### Detailed Description of the Embodiments

For better understanding of the objects, technical solutions and advantages of the present invention, embodiments of the present invention will be described in detail below with reference to the accompanying drawings.

As shown in Fig.2, the service tracking method provided in a first embodiment of the present invention is as follows.

Step 201: after receiving a service tracking identification and a service request message, determining the service requested by the service request message meets the condition specified in the service tracking identification;

After the service tracking identification and the service request message are received, it is judged whether the service requested by the service request message meets the condition specified in the service tracking identification; if it is judged that the service identified by the service tracking identification corresponds to the service requested by the service request message, the service requested by the service request message needs to be tracked, and thus the service is tracked; however, by default, the service is not be tracked;

The service tracking identification contains information about service tracking, such as resource identification and an address where service tracking information is to be uploaded. The resource identification may include the serial number of the service requesting device, the service category number, and service request sequence, and the serial number of the service requesting device may be a Media Access Control (MAC) address, an Internet Protocol (IP) address, a Uniform Resource Identifier (URI), and any other information that may be used to uniquely identify the service requesting device. In special cases, if the resource identification is pre-set to be e.g., 0xFF, the resource identification in the service tracking identification is updated with the service identification requested by the service request message. In this connection, the service identified by the service tracking identification corresponds to the service requested by the service request message. The service category number may be assigned according to internationally popular service categorization standards, as long as it may be used to identify the service. The service request sequence may be a random number. The above three identifications ensure uniqueness, visibility, and non-reproducibility of service tracking (non-reproducibility means that the different service requests from the same service requesting device for the same type of service can be distinguished from each other). The resource identification refers to the codes for a service interaction for a service requested by a service requesting device, that is, service tracking identifications with the same resource identification belong to the same service interaction for the same service requested by the same service requesting device. The address where service tracking information is to be uploaded indicates the destination to which the service tracking information is to be sent. The address information may include, but is not limited to a 32-bit IPv4 address, an address in No.7 signaling network, a URI identification, a port number, depending on the function required by the service requesting device.

Step 20: recording interaction information of the service;

recording interaction information about the service, if the service needs to be tracked;

Step 203: uploading the service tracking information to the upload address contained in the service tracking identification, the service tracking information containing the interaction information.

After the interaction information of the service is recorded, the service tracking information needs to be uploaded. As the service tracking identification contains the upload address, the service tracking information is uploaded to the upload address contained in the service tracking identification, the service tracking information containing the interaction information. In addition, the service tracking information may further contain a resource identification that indicates the service which the service tracking information is related to and the time information that indicates the time when the service tracking information is generated;

It can be seen from above description that, in this embodiment, due to the added address where service tracking information is to be uploaded, the service tracking information may be uploaded to the address contained in the service tracking identification after the service tracking information is obtained. In addition, as the address where service tracking information is to be uploaded may be set according to the condition of service tracking, the service tracking information may be uploaded not only to the O&M controller, thereby improving the flexibility in service tracking, enabling the service tracking information to be managed in a distributed manner and facilitating trouble location and detection.

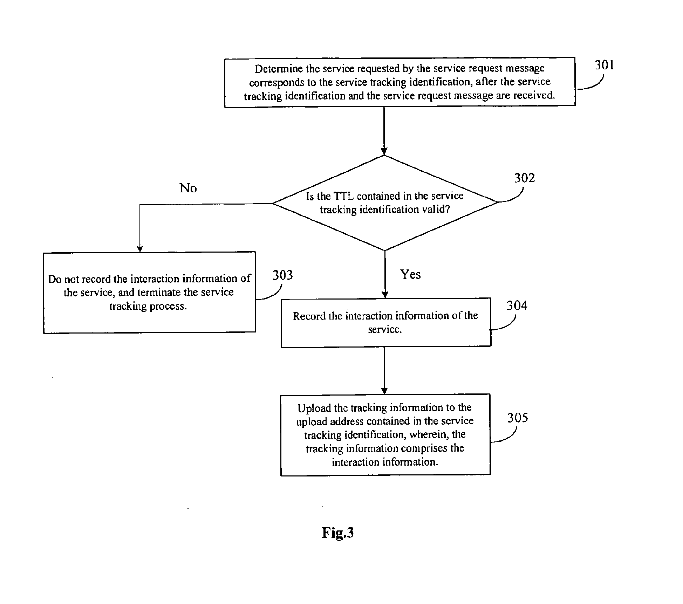

As shown in Fig.3, the service tracking method provided in a second embodiment of the present invention is as follows.

Step 301: after receiving a service tracking identification and a service request message, determining the service requested by the service request message meets the condition specified in the service tracking identification;

Step 302: judging whether Time to Live (TTL) contained in the service tracking identification is valid; if the TTL is valid, proceeding to step 304; otherwise, proceeding to step 303;

The TTL in the service tracking identification is configured to indicate the life cycle of the service tracking identification; once the TTL expires, the service tracking is terminated;

The TTL may be represented in a form of "hop count", like TTL in the IP packet, that is, the TTL may be initialized as a positive integer that is greater than 0 but smaller than 255 (for example, 0xFF 0xY in Hex, wherein, 0x represents hexadecimal system, Y represents any number in Hex); whenever the service passes through a network device, the TTL is decreased by 1; when the TTL is reduced to 0, the network devices do not keep track of the service. The TTL may also be represented in a form of "actual time", that is, the TTL may be initialized as 0xY 0xZ, which represents the hour and minute of standard time; when a network device receives the tracking identification, it may compare the standard time with the TTL; if the standard time indicated by the network device is beyond the time period set in the TTL, it is clear that the tracking identification is valid, and the network device tracks interaction information of the service; otherwise the network device does not track interaction information of the service; the two representation forms are applicable to different application environments: in the form of " hop count", the number of network devices that track the service may be specified, for example, in the case of knowing a fault occurs in the previous five network devices, the TTL may be set to 5, so that the heavy work of tracking the entire service chain may be avoided; in the form of "actual time", the information within a specified time period may be tracked, and the information beyond the time period may be omitted; for example, if the service requesting device sends a service request message in an uncertain time period, the TTL may be set to the actual time instead of the number of valid hops, so that meaningless waiting of the network devices may be avoided;

Step 303: terminating the service tracking process without recording interaction information of the service, and;

As the TTL has expired, it is unnecessary to track the service any more; therefore, it is unnecessary to record the interaction information of the service;

Step 304: recording the interaction information of the service;

Step 305: uploading the service tracking information to the upload address contained in the service tracking identification, the service tracking information containing the interaction information;

It can be seen from above description: compared to the first embodiment, a TTL is added in the service tracking identification in the service tracking method provided in the second embodiment, so that the network devices track the service only in the TTL; therefore, once the TTL expires, it is unnecessary to send a command to terminate the service tracking; instead, the network devices terminate the service tracking automatically by judging whether the TTL expires; in that way, the procedure of terminating service tracking may be omitted, and thereby the system resources may be saved and the system efficiency may be improved.

In actual applications, if the TTL is represented in the form of "number of valid hops", the following procedures must be executed before the service tracking identification is sent to the next network device:

Update the TTL contained in the service tracking identification; as the TTL is represented in the form of "number of valid hops", once the current network device starts tracking the service, the number of valid hops must be decreased by 1, so as to update the TTL.

Send the updated service tracking identification.

In that way, whenever the service tracking identification passes through a network device, the number of valid hops is decreased by 1; when a network device finds the number of valid hops is equal to 0, it terminates the service tracking; thereby, the service tracking may be terminated automatically; furthermore, in actual applications, the service tracking identification transmitted through the network devices may be included in the service request message; in that case, updating the service tracking identification is equivalent to updating the service request message; if the service tracking identification is included in the service request message, the service tracking identification may be sent by sending merely the service request message; therefore, the sending procedures may be simplified, and the system efficiency may be improved.

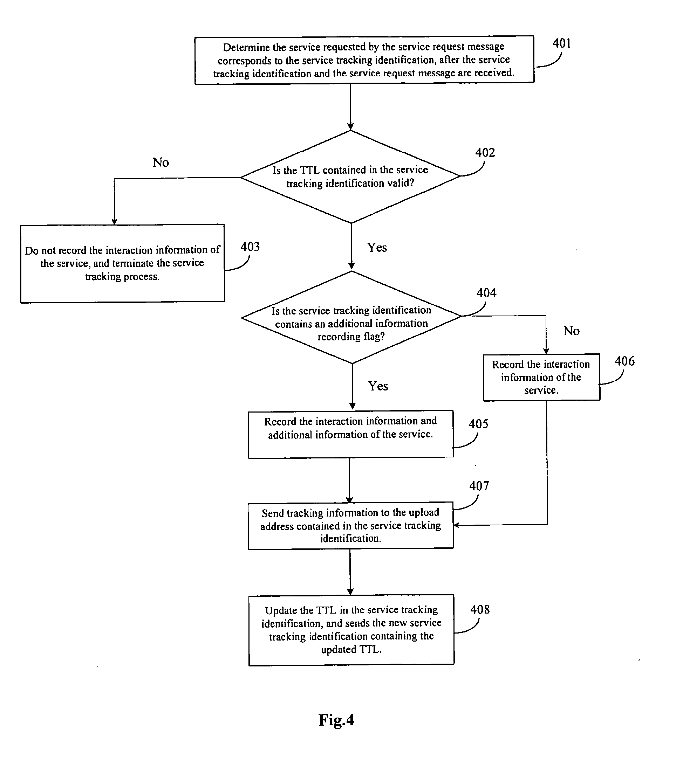

As shown in Fig.4, the service tracking method provided in a third embodiment of the present invention is as follows.

Step 401: after receiving a service tracking identification and a service request message, determining the service requested by the service request message meets the condition specified in the service tracking identification;

Step 402: judging whether Time to Live (TTL) contained in the service tracking identification is valid; if the TTL is valid, proceeding to step 404; otherwise, proceeding to step 403;

Step 403: terminating the service tracking process without recording interaction information of the service;

Step 404: judging whether the service tracking identification contains an additional information recording flag; if the service tracking identification contains the additional information recording flag, proceeding to 405; otherwise, proceeding to step 406;

If the working states of the network devices are required to be known, an additional information recording flag may be added in the service tracking identification, so that the network devices may record appropriate additional information if they fmd the flag when they analyze the service tracking identification; the additional information may be the input information or output information of the network device, the time when the additional information is sent, the information of the network device that sends the additional information, the information of the network device that receives the additional information, or any relevant information need to be recorded, or any combination of above information types; preferably, the flag may be added to indicate to record specific protocol information, for example, the Hyper Text Transport Protocol (HTTP) (application-lever layer protocol), the TCP (transport-lever layer protocol), etc.; of course, if different types of additional information are to be recorded, different flags must be used; by recording and uploading such information, not only the interaction information of the service but also the working information of the network device may be obtained, so that the working states of the network devices may be judged, and, in case of any failure, the failure may be located and eliminated more quickly and accurately;

Step 405: recording the interaction information and additional information of the service, and then proceeding to step 407;

Step 406: recording the interaction information of the service;

Step 407: uploading the service tracking information to the upload address contained in the service tracking identification;

If additional information is recorded, the service tracking information comprises interaction information and additional information; if no additional information is recorded, the service tracking information does not include additional information;

Step 408: updating the TTL in the service tracking identification, and sending the new service tracking identification containing the updated TTL;

It can be seen from above description, compared to the second embodiment, a procedure of recording additional information is added in the service tracking method provided in the third embodiment, so that the working states of the network device may be judged with the additional information, and, in case of any failure, the failure may be located and eliminated more quickly and accurately.

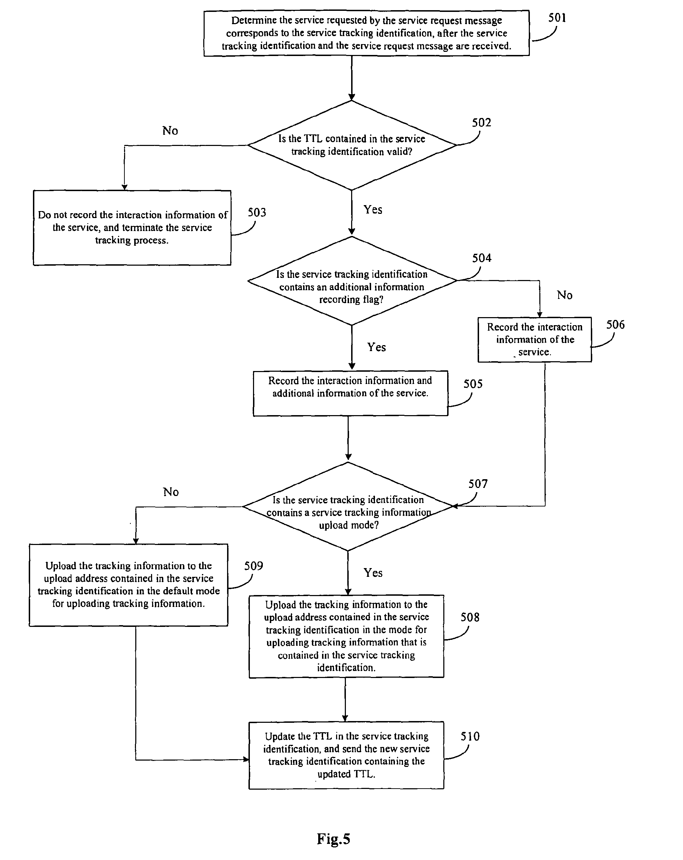

As shown in Fig.5, the service tracking method provided in a fourth embodiment of the present invention is as follows.

Step 501: after receiving a service tracking identification and a service request message, determining the service requested by the service request message meets the condition specified in the service tracking identification;

Step 502: judging whether Time to Live (TTL) contained in the service tracking identification is valid; if the TTL is valid, proceeding to step 504; otherwise, proceeding to step 503;

Step 503: terminating the service tracking process without recording interaction information of the service;

Step 504: judging whether the service tracking identification contains an additional information recording flag; if the service tracking identification contains the additional information recording flag, proceeding to step 505; otherwise, proceeding to step 506;

Step 505: recording the interaction information and additional information of the service, and then going to step 507;

Step 506: recording the interaction information of the service;

Step 507: judging whether the service tracking identification specifies a service tracking information upload mode, if the service tracking identification specifies the service tracking information upload mode, proceeding to step 508; otherwise, proceeding to step 509;

If the network entity that receives the service tracking information requires receiving the service tracking information in a specific mode, the service tracking information upload mode may be contained in the service tracking identification, for example, the network entity may specify uploading the service tracking information via HTTP or File Transfer Protocol (FTP), or in any other mode; furthermore, the network entity may specify the port for uploading the service tracking information, so that the network device may upload the service tracking information to the specified port in the specified upload mode; moreover, the network entity may specify uploading some relevant information, for example, the upload time, the information of the sender, the information of the receiver, etc.;

Step 508: uploading the service tracking information to the upload address contained in the service tracking identification in the mode of uploading the service tracking information contained in the service tracking identification, and then proceeding to step 510;

Step 509: uploading the service tracking information to the upload address contained in the service tracking identification in the default mode of service tracking information to be uploaded;

Step 510: updating the TTL in the service tracking identification, and sending the new service tracking identification containing the updated TTL;

It can be seen from above description, compared to the third embodiment, a procedure of ascertaining the mode of uploading the service tracking information is added in the service tracking method provided in the fourth embodiment, so that the service tracking information may be uploaded in the service tracking information upload mode; therefore, the network entity that expects to receive the service tracking information may receive the service tracking information ultimately; the reason for specifying the service tracking information upload mode may be: the default mode or port for receiving the service tracking information about the network entity is occupied, and therefore a mode or port that is not occupied should be specified.

In actual applications, the service tracking identification received by the network device may fall into the following cases:

(1) Generated and sent by the O&M controller;

The O&M controller expects the service requesting device to record the interaction information of the service when the service requesting device sends the service request; and then, the O&M controller sends a passive request to the network device, which is the first network device that handles the service request when the service requesting device requests the service; when the network device receives the passive request from the O&M controller, it stores the service tracking identification in the passive request; when the service requesting device sends a service request, the network device makes comparison first; if the service requesting device is an entity that the O&M controller wants to keep track of and the service requested by the service requesting device is a service that the O&M controller wants to keep track of, the network device invokes the stored tracking identification and carries out appropriate handling as indicated by the tracking identification, including recording interaction information of the service; then, the network device transmits the updated tracking identification to the next network device and upload the service tracking information to the upload address contained in the service tracking identification, the upload address may be the network address of the O&M controller, the network address of a mobile tracker, or the network address of the service requesting device;

(2) Generated and sent by the service requesting device;

The service requesting device decides by itself to keep track of the service; and then, the service requesting device sets the tracking identification by itself, and sends a service request that carries the tracking identification to the network device; in that case, in actual applications, the service tracking information need be uploaded to the O&M controller, so as to ensure centralized control and security of the system;

(3) Updated and sent by the previous network device, which handles the service identified by the service tracking identification; when the previous network device receives the service tracking identification and the service request message, it keeps track of the corresponding service, and update the corresponding service tracking identification, and send the updated service tracking identification to the next network device that is to handle the service;

(4) Generated by the O&M controller, and sent by the service requesting device;

The O&M controller expects the service requesting device to record the service tracking information by itself; the O&M controller generates a service tracking identification first, and then sends a passive request that carries the service tracking identification to the service requesting device; when the service requesting device receives the passive request, it must modify its service request message to add the tracking identification into the service request message, and then send the updated service request;

In addition to above cases, other cases are possible to enable the network devices to receive the service tracking identification in actual applications.

In actual applications, a mobile tracker may attempt to participate in service tracking. If a mobile tracker attempts to participate in service tracking, the mobile tracker sends a request to the O&M controller to request for participating in the service tracking; when the O&M controller receives the request information, it learns that an unknown device is trying to join into the service network and keep track of the service. And then, the O&M controller generates a service tracking identification, send a Request Accepted message to the mobile tracker to inform the mobile tracker that the request has been accepted and instruct the mobile tracker to prepare for receiving service tracking information; in addition, the O&M controller sends the information carrying the service tracking identification to the service requesting device; the service requesting device learns about the address of the mobile tracker, the resource identification involved in the service interaction, and the upload mode from the tracking identification; as the entity that expects to obtain the service tracking information is a mobile tracker, the upload address for uploading the service tracking information contained in the service tracking identification is the address of the mobile tracker; then, the service requesting device may send a service request, with the service tracking identification carried in the service request.

As the mobile tracker joins the network temporarily, in order to prevent the mobile tracker from listening to the service in the service requesting device maliciously, the mobile tracker should be authenticated, so as to ensure security of the service tracking mechanism. In the entire service chain, the O&M controller maintains a key (the key should be changed from time to time by the O&M controller); in order to obtain the service tracking information, the mobile tracker must send a piece of cipher text to the O&M controller when it requests for service tracking actively; when the O&M controller receives the cipher text, it decrypts the ciphered text with the key; if the plain text obtained after decryption is the request information specified by the O&M controller, it is clear that the mobile tracker has passed the authentication successfully and the mobile tracker is an authentic device and is permitted to carry out subsequent operations; if the mobile tracker fails to pass the authentication, it is clear that the mobile tracker is not an authentic device, and therefore a service tracking identification is not generated for the mobile tracker; specifically, the O&M controller may return a message to the mobile tracker, to inform that the mobile tracker failed to pass through the authentication.

For example, in the embodiments of the present invention, a service tracking identification in the format described in Table 1 may be used:

**Table 1 Format of Service Tracking identification**

| Service Tracking identification | | | | |
|---|---|---|---|---|
| Tracking identification | Tracking Command | | | |
| Resource identification | Upload Address | Upload Mode | Additional Information | Time to Live (TTL) |
| Required | Required | Optional | Optional | Optional |

As shown in Table 1, the service tracking identification comprises a tracking identification and a tracking command, the tracking identification is a resource identification, which is an required item, because the resource identification may identify the service requested by the service requesting device uniquely; the tracking command comprises upload address, additional information, upload mode, and TTL, only the upload address is a required item because it enables the network devices to upload service tracking information to the corresponding address, while other table entries are optional; the upload address may comprises a plurality of addresses, i.e., the network device may be instructed to upload tracking information to a plurality of addresses; accordingly, the upload mode, additional information, and TTL may be set to comprise a plurality of values, depending on the upload address;

Of course, the format described in Table 1 is only a possible case in the embodiments of the present invention; in actual applications, a service tracking identification in any other format is permitted; therefore, the present invention doesn't enforce any limitation to the format of the service tracking identification.

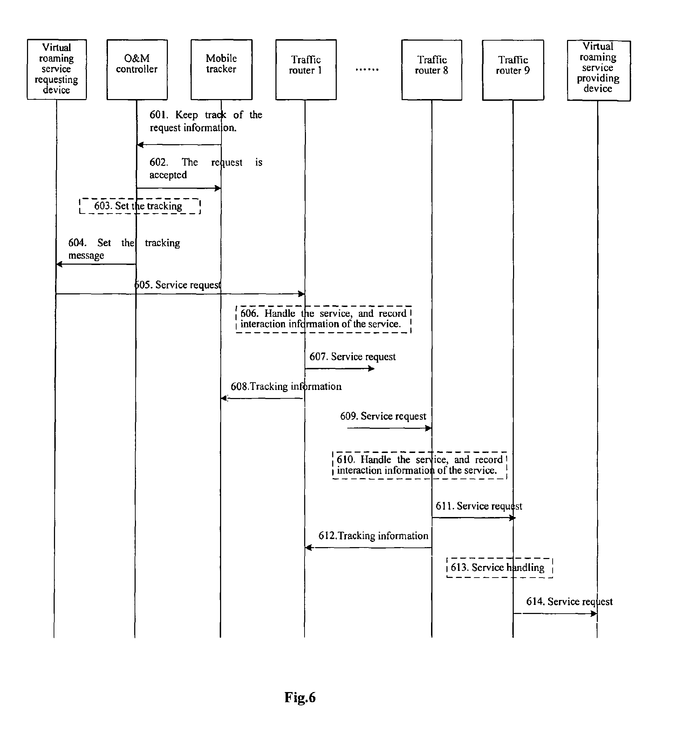

Below the technical scheme of the present invention will be described in two embodiments. Fig.6 shows a signaling flow diagram of the service tracking method in a fifth embodiment of the present invention; in that embodiment, the network devices are traffic routers.

Step 601: The mobile tracker sends the tracking request message to the O&M controller, the tracking request message being transmitted in an encrypted manner;

Step 602: The O&M controller sends a Request Accepted message to the mobile tracker: when the O&M controller receives the tracking request message, it decrypts the tracking request information and authenticates the mobile tracker; if the authentication is passed successfully, the O&M controller deems that the mobile tracker is an authentic device, and thereby sends a Request Accepted message to the mobile tracker; as the Request Accepted message is a simple notification message, it may be transmitted in plain text; of course, the Request Accepted message may also be transmitted in cipher text; when the mobile tracker receives the Request Accepted message, it opens the port and waits for receiving the service tracking information;

Step 603: The O&M controller accepts the tracking request from the mobile tracker, and set a service tracking identification according to the service demand, in conjunction with the address information uploaded from the mobile tracker; for example, a service tracking identification may be set as shown in Table 2:

**Table 2 Service Tracking identification**

| Service Tracking identification | | | | |
|---|---|---|---|---|
| Tracking identification | Tracking Command | | | |
| Resource identification | Upload Address | Upload Mode | Additional Information | Time to Live (TTL) |
| 0x55 0xfe | 0xc0 0xa8 | 0x00 0x80 | 0x00 0x00 | 0x08 |
| 0x33 0x11 | 0x00 0x21 | | 0x33 | |

"0x55 0xfe 0x33 0x11" is the resource identification in Hex form; "0xc0 0xa8 0x00 0x21" is Hex form of IPv4 dotted decimal notation address in, which represents the upload address; "0x00 0x80" indicates the upload mode, which indicates the interaction for service tracking information shall be carried out in HTTP protocol; "0x00 0x00 0x03" indicates the format of additional information, "0x00 0x00" indicates to add time information into the additional information of service tracking, and "0x03" indicates to keep track of the input and output of the traffic routers; "0x08" represents the TTL of the service tracking identification, which indicates to keep track of the interaction information of the 8 traffic routers involved in the service interaction;

Step 604: The O&M controller sends a service tracking information setting command to the virtual travel service requesting device, to instruct that the service tracking identification should be carried in the service request message to keep track of the service when the virtual travel service requesting device sends the service request message;

Now, the authentication for the mobile tracker is completed, the service tracking identification is set, and the tracking task is issued, so as to make preparation for tracking the service in the virtual travel service requesting device;

If the service tracking identification shown in Table 2 is added to the service request message from the virtual travel service requesting device, the traffic router involved in the service interaction then handles the service tracking information according to the service tracking identification; below the service tracking process performed by the traffic router will be described in detail;

Step 605: The virtual travel service requesting device sends a service request message carrying the service tracking identification to the traffic router 1;

Step 606: When the traffic router 1 receives the service request message from the virtual travel service requesting device, it analyzes the service tracking identification carried in the service request message, as shown in Table 2. First, the traffic router 1 checks the TTL field in the service tracking identification (TTL=8) and ascertains that it should record and upload the service tracking information; then, the traffic router 1 checks other information in the service tracking identification and ascertain that it should record the input/output information (additional information attribute = 0x03) into the service tracking information and feed back the tracking messages in HTTP protocol (bound protocol = 0x00 0x80) in time sequence (additional information attribute = 0x00 0x00) to the address contained in the service tracking identification (address = 0xc0 0xa8 0x00 0x21, i.e., 192.168.0.33 denoted in IPv4 dotted decimal notation, which is the IPv4 address of the mobile tracker); after the traffic router 1 analyzes the service tracking identification, it handles the service request, decreases the TTL in the service tracking identification by 1 (now, the TTL is 0x07), and generates a new service request message;

Step 607: After the traffic router 1 handles the received service request message, it transmits the latest service request message generated by itself to the traffic router 2; as the service tracking identification and the main part of the service request message are updated by the traffic router 1, they are different to the service tracking identification and the service request message that are sent from the virtual roaming service requesting device to the traffic router 1;

Step 608: The traffic router 1 uploads the service tracking information to the mobile tracker in HTTP protocol according to the setting of the service tracking identification; the service tracking information contains the resource identification that indicates the exact service, the time information that indicates the time when the service tracking information is generated, and the input/output information of the traffic router 1;

The traffic routers 2~7 handle the service, transmit the updated service request message, and upload the service tracking information in the same way as the traffic router 1 does; therefore, the handling process is not shown in the drawings, and will not be detailed further here;

Step 609: After the traffic router 7 handles the service request, it transmits the latest service request message to the traffic router 8; now, after the service tracking identification and the main part of the service request message are updated by the traffic router 7, the TTL in the service tracking identification has been modified to 0x01;

Step 610: After the traffic router 8 receives the service request message updated by the traffic router 7, it analyzes the service tracking identification in the service request message; first, it checks the TTL field (TTL=1) in the service tracking identification and ascertains it should record and upload the service tracking information; then, the traffic router 8 handles the service in the same way as the traffic router 1 does;

Step 611: After the traffic router 8 handles the service request, it transmits the latest service request message to the traffic router 9; now, after the service tracking identification and the main part of the service request message are updated by the traffic router 8, the TTL in the service tracking identification has been modified to 0x00;

Step 612: The traffic route 8 uploads the service tracking information to the mobile tracker according to the setting of the service tracking identification;

Step 613: After the traffic router 9 receives the service request message updated by the traffic router 8, the traffic router 9 analyzes the service tracking identification in the service request message; first, it checks the TTL field (TTL=0) in the service tracking identification and ascertains it doesn't have to record and upload the service tracking information; as the service tracking identification has expired, it becomes invalid automatically, and the service tracking task is terminated, and the service tracking information will no longer be recorded and uploaded; next, the traffic router 9 handles the service;

Step 614: After the traffic router 9 handles the received service request message, it transmit the latest service request message to the virtual travel service providing device.

In this embodiment, as the entity that requests to obtain the service tracking information is the mobile tracker, the upload address in the service tracking identification is set to comprise the network address of the mobile tracker; therefore, after the traffic router obtains the service tracking information, it uploads the service tracking information directly to the mobile tracker; furthermore, with the TTL setting, the traffic router may judge whether the TTL expires when it receives the service tracking identification and accordingly terminate service tracking automatically; moreover, the service requesting device is only required to send the service tracking identification to the traffic router 1, and then the service tracking identification is be updated and sent by the traffic routers subsequently; therefore, the service requesting device doesn't have to send the service tracking identification time after time; in addition, as the service tracking identification is carried in the service request message, the system resources may be saved, and the system efficiency may be improved.

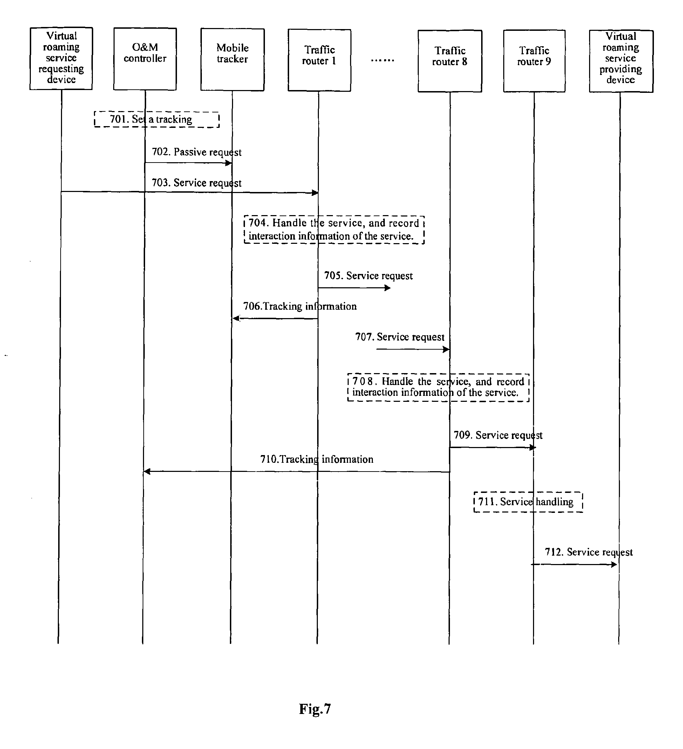

Moreover, a sixth embodiment of the service tracking method is further provided in embodiments of the present invention. Compared to the fifth embodiment, the handling procedures of the mobile tracker are omitted in the sixth embodiment, as shown in Fig.7:

Step 701: The O&M controller searches for the information about the virtual travel service requesting device in the network information of the system, and searches for the traffic routers through which the service request about service x from the virtual travel service requesting device may pass in the list of traffic routers; the O&M controller chooses the first traffic router (traffic router 1) in the path as the object that receives the service tracking identification, and generates a service tracking identification according to the service demand; the setting of the service tracking identification is shown in Table 3:

**Table 3 Service Tracking identification**

| Service Tracking identification | | | | |
|---|---|---|---|---|
| Tracking identification | Tracking Command | | | |
| Resource identification | Upload Address | Upload Mode | Additional Information | Time to Live (TTL) |
| 0x55 0xfe | 0 | 0x00 0x80 | 0x00 0x00 | 0x08 |
| 0x33 0x00 | | | 0x00 | |

"0x50 0xfe 0x33 0x00" is the resource identification in Hex form, which identifies the service about service x requested by the virtual travel service requesting device uniquely; "0" is the address information, which indicates to upload the service tracking information to the default address, i.e., the O&M controller; "0x00 0x80" is the bound protocol, which indicates HTTP protocol shall be used in the interaction for service tracking information; "0x00 0x00 0x00" represents the format of additional information, "0x00 0x00" indicates time information should be added to the service tracking information, "0x00" indicates not to keep track of the input and output information of the traffic router but only record interaction information of the service; "0x08" represents the TTL of the tracking identification, which indicates only to keep track of the interaction information through 8 traffic router involved in the service interaction;

Step 702: The O&M controller sends the setting of the service tracking information to the traffic router 1, to instruct the traffic router 1 to carry out service tracking;

The traffic router 1 stores the service tracking identification as shown in Table 3, and updates and transmits the service tracking identification, so that the traffic router involved in the service interaction handles the service and records the service tracking information according to the latest tracking identification;

Step 703: The virtual travel service requesting device sends a service request message to the traffic router 1, the service request message being used to request for service x;

Step 704: When the traffic router 1 receives the service request message from the virtual travel service requesting device, it invokes the service tracking identification stored in the traffic router 1, analyzes the service type and the service requesting device that requests the service needed to be tracked according to the resource identification contained in the service tracking identification, and compares the analytical results with the received service request; if the comparison result indicates that the service requested by the virtual travel service requesting device does not correspond with the service indicated by the service tracking identification, the traffic router 1 handles the service but not record interaction information of the service; if the comparison result indicates that the service requested by the virtual travel service requesting device corresponds with the service indicated by the service tracking identification, the traffic router 1 handles the service, record the service tracking information, and upload the service tracking information according to the tracking identification; the service tracking identification is shown in Table 3; first, the traffic router 1 checks the TTL field (TTL=8) in the service tracking identification and ascertains it should record and upload the service tracking information; then, the traffic router 1 checks other information in the service tracking identification and ascertains it only has to record interaction information of the service (i.e., service log) in the service tracking information and feed back the tracking message in HTTP protocol (bound protocol = 0x00 0x80) to the O&M controller in time sequence (additional information ofmat = 0x00 0x00); after the traffic router 1 analyzes the service tracking identification, it handles the service request, decreases the TTL in the service tracking identification by 1 (now, TTL=07), and creates a new service request message;

Step 705: After the traffic router 1 handles the received service request message, it transmits the latest service request message created by itself to the traffic router 2; as the service tracking identification and the main part of the service request message are updated by the traffic router 1, they are different to the service tracking identification and the service request message that are sent from the virtual roaming service requesting device to the traffic router 1;

Step 706: The traffic router 1 uploads the service tracking information to the O&M controller via HTTP protocol according to the setting of the service tracking identification; the service tracking information contains the resource identification that indicates the exact service, the time information that indicates the time when the service tracking information is generated, and the service information that indicates the service record for the service interaction;

Step 707: After the traffic router 7 handles the service request, it transmits the latest service request message to the traffic router 8; now, after the service tracking identification and the main part of the service request message are updated by the traffic router 7, the TTL in the service tracking identification has been modified to 0x01;

Step 708: After the traffic router 8 receives the service request message updated by the traffic router 7, it analyzes the service tracking identification in the service request message; first, it checks the TTL field (TTL=1) in the service tracking identification and ascertains it should record and upload the service tracking information; then, the traffic router 8 handles the service in the same way as the traffic router 1 does;

Step 709: After the traffic router 8 handles the service request, it transmits the latest service request message to the traffic router 9; now, after the service tracking identification and the main part of the service request message are updated by the traffic router 8, the TTL in the service tracking identification has been modified to 0x00;

Step 710: The traffic route 8 uploads the service tracking information to the O&M controller according to the setting of the service tracking identification;

Step 711: After the traffic router 9 receives the service request message updated by the traffic router 8, the traffic router 9 analyzes the service tracking identification in the service request message; first, it checks the TTL field (TTL=0) in the service tracking identification and ascertains it doesn't have to record and upload the service tracking information; as the service tracking identification has expired, it becomes invalid automatically, and the service tracking task is terminated, and the service tracking information will no longer be recorded and uploaded; next, the traffic router 9 handles the service;

Step 712: After the traffic router 9 handles the received service request message, it transmits the latest service request message to the virtual travel service providing device.

In this embodiment, as the upload address in the service tracking identification is set to comprise the network address of the O&M controller, after the traffic router obtains the service tracking information, it then uploads the service tracking information to the O&M controller; furthermore, with the TTL setting, the traffic router may judge whether the TTL expires when it receives the service tracking identification and accordingly terminate service tracking automatically; moreover, the service requesting device is only required to send the service tracking identification to the traffic router 1, and then the service tracking identification is updated and sent by the traffic routers subsequently; therefore, the service requesting device doesn't have to send the service tracking identification time after time; in addition, as the service tracking identification is carried in the service request message, the system resources may be saved, and the system efficiency may be improved.

Those skilled in the art should understand that all or partial steps of the method in above embodiments may be accomplished by instructing appropriate hardware with a program; the program may be stored in a storage medium that may be accessed with computer, and comprises the following executing procedures:

ascertaining the service requested by the service request message corresponds to the service tracking identification, after receiving the service tracking identification and the service request message;

recording the interaction information of the service; and

uploading the service tracking information to the upload address contained in the service tracking identification, the service tracking information containing the interaction information.

The above-mentioned storage medium may be a read-only storage device, a magnetic disk, an optical disk, etc.

Though the service tracking method is detailed in embodiments as above, it is understood that some procedures are exchangeable in executing sequence; for example, the network devices (e.g., traffic routers) may upload the service tracking information first and then send the service request message; in addition, the meanings of the table entries of service tracking identification may be defmed as required and are not limited to the definitions in the description, for example, another format other than the hexadecimal system may be used, etc.

The O&M controller and the service tracking system provided in embodiments of the present invention will be described below.

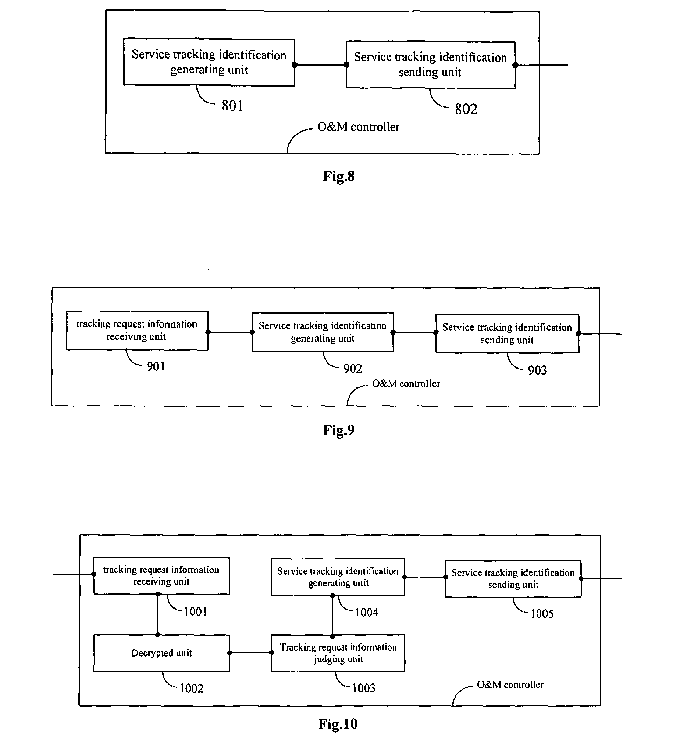

As shown in Fig.8, an O&M controller provided in the embodiment of the present invention comprises:

a service tracking identification generating unit 801, configured to generate a service tracking identification containing an upload address; where,

the service tracking identification may be generated by the O&M controller actively or generated passively when the triggering information is received, for example, the triggering information may be the tracking request information from a mobile tracker; and

a service tracking identification sending unit 802, configured to send the service tracking identification; where,

the service tracking identification may be sent to the service requesting device or the network devices;

It can be seen from above description: in this embodiment, as the address where service tracking information is to be uploaded is added in the service tracking identification, the service tracking information may be uploaded to the address contained in the service tracking identification after the service tracking information is obtained; in addition, the address where service tracking information is to be uploaded may be set according to the condition of service tracking; therefore, the service tracking information may be uploaded not only to the O&M controller, the flexibility in service tracking may be improved, and the service tracking information may be managed in a issued manner, so as to facilitate trouble locating and detection.

As shown in Fig.9, another O&M controller provided in the embodiment of the present invention comprises:

a tracking request information receiving unit 901, configured to receive the tracking request information from a mobile tracker, the tracking request information containing the network address of the mobile tracker;

a service tracking identification generating unit 902, configured to generate a service tracking identification containing an upload address after the tracking request receiving unit receives the tracking request information from the mobile tracker, the upload address containing the network address of the mobile tracker; and

a service tracking identification sending unit 903, configured to send the service tracking identification.

In this embodiment, the O&M controller generates a service tracking identification and sets the upload address to contain the address of the mobile tracker when it is triggered by the tracking request information from the mobile tracker, so that the service tracking information may be sent to the mobile tracker and the service network may be expanded.

As shown in Fig.10, another O&M controller provided in the embodiment of the present invention comprises:

a tracking request information receiving unit 1001, configured to receive the tracking request information from the mobile tracker, the tracking request information containing the network address of the mobile tracker;

a decrypting unit 1002, configured to decrypt the tracking request information with a pre-set key after the tracking request receiving unit receives the tracking request information from the mobile tracker;

a tracking request information judging unit 1003, configured to judge whether the decrypted tracking request information meets the pre-set specification;

a service tracking identification generating unit 1004, configured to generate a service tracking identification containing an upload address, if the tracking request information judging unit judges that the decrypted tracking request information meets the pre-set specification, the upload address containing the network address of the mobile tracker; and

a service tracking identification sending unit 1005, configured to send the service tracking identification.

In this embodiment, a decrypting unit is further added, so that the mobile tracker must pass authentication successfully before it may obtain the service tracking information; in that way, the O&M controller may prevent the mobile tracker from listening to the service requesting device maliciously, and thereby enhance system security.

Another O&M controller is provided in a fourth embodiment of the present invention; compared to the O&M controller provided in embodiments 1-3, the O&M controller provided in embodiment 4 further comprises:

a service tracking information receiving unit, configured to receive the service tracking information from the network devices, if the upload address comprises the network address of the O&M controller; where,

if the upload address comprises the address of the O&M controller, the service tracking information is sent to the O&M controller, so that the service requested by the service requesting device may be kept track of.

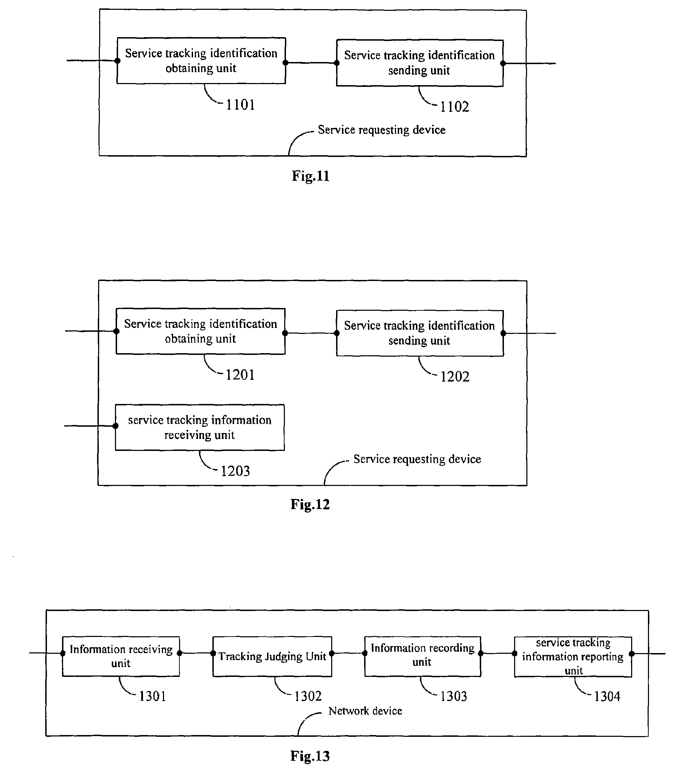

As shown in Fig.11, a service requesting device provided in the embodiment of the present invention comprises:

a service tracking identification obtaining unit 1101, configured to receive a service tracking identification from the O&M controller or generate a service tracking identification, the service tracking identification containing an upload address; and

a service tracking identification sending unit 1102, configured to send the service tracking identification.

It can be seen from above description: in this embodiment, as the address where service tracking information is to be uploaded is added in the service tracking identification, the service tracking information may be uploaded to the address contained in the service tracking identification after the service tracking information is obtained; in addition, the address where service tracking information is to be uploaded may be set according to the condition of service tracking; therefore, the service tracking information may be uploaded not only to the O&M controller, the flexibility in service tracking may be improved, and the service tracking information may be managed in a issued manner, so as to facilitate trouble locating and detection.

As shown in Fig.12, another service requesting device provided in the embodiment of the present invention comprises:

a service tracking identification obtaining unit 1201, configured to receive a service tracking identification from the O&M controller or generate a service tracking identification, the service tracking identification containing an upload address;

a service tracking identification sending unit 1202, configured to send the service tracking identification;

a service tracking information receiving unit 1203, configured to receive the service tracking information from the network devices, if the upload address comprises the network address of the service requesting device; where,

if the upload address in the service tracking identification comprises the address of the service requesting device, the service tracking information receiving unit added in the service requesting device ensures the service tracking information may be received.

As shown in Fig. 13, a network device provided in the embodiment of the present invention comprises:

an information receiving unit 1301, configured to receive the service tracking identification and the service request message;

a tracking judging unit 1302, configured to judge whether the service requested by the service request message meets the service tracking identification;

an information recording unit 1303, configured to record interaction information of the service if the tracking judging unit judges that the service requested by the service request message meets the service tracking identification; and

a service tracking information reporting unit 1304, configured to upload the service tracking information to the upload address contained in the service tracking identification, the service tracking information containing interaction information.

The network device provided in the embodiment of the present invention may be used as a traffic router in the network; it can be seen from above description: in this embodiment, as the address where service tracking information is to be uploaded is added in the service tracking identification, the service tracking information may be uploaded to the address contained in the service tracking identification after the service tracking information is obtained; in addition, the address where service tracking information is to be uploaded may be set according to the condition of service tracking; therefore, the service tracking information may be uploaded not only to the O&M controller, the flexibility in service tracking may be improved, and the service tracking information may be managed in a issued manner, so as to facilitate trouble locating and detection.

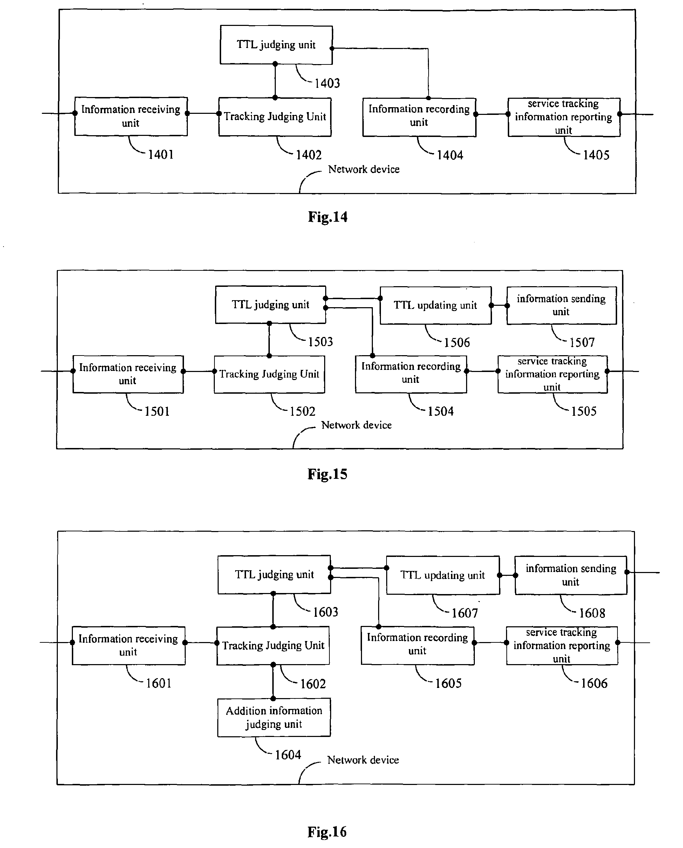

As shown in Fig.14, another network device provided in the embodiment of the present invention comprises:

an information receiving unit 1401, configured to receive the service tracking identification and the service request message;

a tracking judging unit 1402, configured to judge whether the service requested by the service request message meets the service tracking identification;

a TTL judging unit 1403, configured to judge whether the TTL contained in the service tracking identification is valid if the tracking judging unit judges that the service requested by the service request message meets the service tracking identification;

an information recording unit 1404, configured to record interaction information of the service if the TTL judging unit judges that the TTL contained in the service tracking identification is valid; and

a service tracking information reporting unit 1405, configured to upload the service tracking information to the upload address contained in the service tracking identification, the service tracking information containing interaction information.

In this embodiment, as a TTL is added in the service tracking identification, the network devices keep track of the service only in the TTL; therefore, once the TTL expires, it is unnecessary to send a command to terminate the service tracking; instead, the network devices then terminates the service tracking automatically by judging whether the TTL expires; in that manner, the procedure of terminating service tracking may be omitted, and thereby the system resources may be saved and the system efficiency may be improved.

As shown in Fig.15, another network device provided in the embodiment of the present invention comprises:

an information receiving unit 1501, configured to receive the service tracking identification and the service request message;

a tracking judging unit 1502, configured to judge whether the service requested by the service request message meets the service tracking identification;

a TTL judging unit 1503, configured to judge whether the TTL contained in the service tracking identification is valid if the tracking judging unit judges that the service requested by the service request message meets the service tracking identification;

an information recording unit 1504, configured to record interaction information of the service if the TTL judging unit judges that the TTL contained in the service tracking identification is valid;

a service tracking information reporting unit 1505, configured to upload the service tracking information to the upload address contained in the service tracking identification, the service tracking information containing interaction information;

a TTL updating unit 1506, configured to update the TTL contained in the service tracking identification if the TTL judging unit judges that the TTL contained in the service tracking identification is valid; and

an information sending unit 1507, configured to send the service tracking identification containing the updated TTL.

The TTL updating unit added in the embodiment ensures the TTL may be updated when it passes through the network device, and then the service tracking identification containing the updated TTL may be sent by the information sending unit, so that the TTL expires ultimately after a predefined time period, and the service tracking is terminated automatically; therefore, the system flow may be simplified, and the system efficiency may be improved.

As shown in Fig.16, another network device provided in the embodiment of the present invention comprises:

an information receiving unit 1601, configured to receive the service tracking identification and the service request message;

a tracking judging unit 1602, configured to judge whether the service requested by the service request message meets the service tracking identification;

a TTL judging unit 1603, configured to judge whether the TTL contained in the service tracking identification is valid if the tracking judging unit judges that the service requested by the service request message meets the service tracking identification;

an additional information judging unit 1604, configured to judge whether the service tracking identification contains an additional information recording flag if the tracking judging unit judges that the service requested by the service request message meets the service tracking identification;

an information recording unit 1605, configured to record interaction information and additional information of the service if the TTL judging unit judges that the TTL contained in the service tracking identification is valid and the additional information judging unit judges that the service tracking identification contains an additional information recording flag;

a service tracking information reporting unit 1606, configured to upload the service tracking information to the upload address contained in the service tracking identification, the service tracking information containing interaction information and additional information;

a TTL updating unit 1607, configured to update the TTL contained in the service tracking identification if the TTL judging unit judges that the TTL contained in the service tracking identification is valid; and

an information sending unit 1608, configured to send the service tracking identification containing the updated TTL.

In this embodiment, a unit configured to record additional information is added, by recording additional information, the working states of the network devices may be judged with the additional information, and, in case of any failure, the failure may be located and thereby eliminated more quickly and accurately.

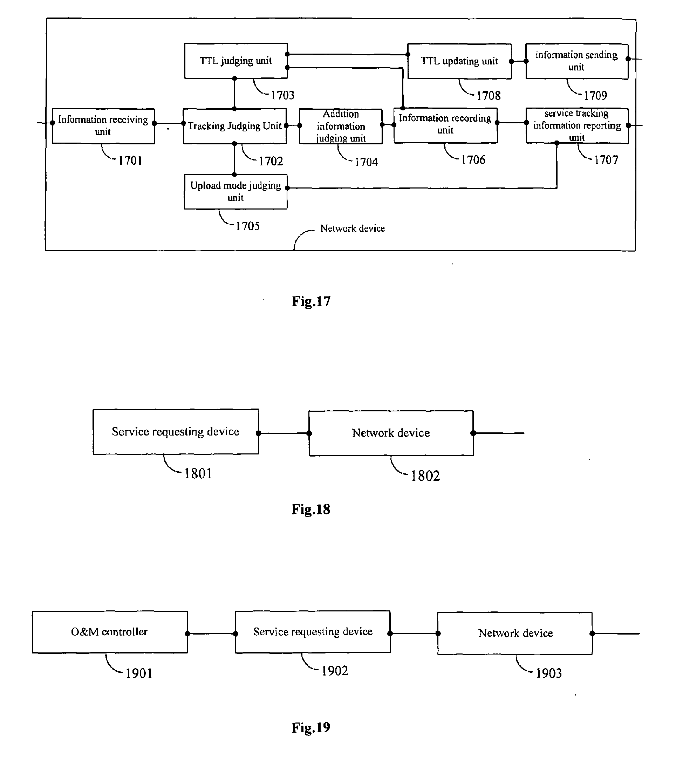

As shown in Fig.17, a network device provided in the embodiment of the present invention comprises:

an information receiving unit 1701, configured to receive the service tracking identification and the service request message;

a tracking judging unit 1702, configured to judge whether the service requested by the service request message meets the service tracking identification;

a TTL judging unit 1703, configured to judge whether the TTL contained in the service tracking identification is valid if the tracking judging unit judges that the service requested by the service request message meets the service tracking identification;

an additional information judging unit 1704, configured to judge whether the service tracking identification contains an additional information recording flag;

an information recording unit 1705, configured to record interaction information and additional information of the service if the TTL judging unit judges that the TTL contained in the service tracking identification is valid and the additional information judging unit judges that the service tracking identification contains an additional information recording flag;

an upload mode judging unit 1706, configured to judge whether the service tracking identification contains a service tracking information upload mode;

a service tracking information reporting unit 1707, configured to upload the service tracking information to the upload address contained in the service tracking identification in the service tracking information upload mode, if the upload mode judging unit judges that the service tracking identification contains the service tracking information upload mode;

a TTL updating unit 1708, configured to update the TTL contained in the service tracking identification if the TTL judging unit judges that the TTL contained in the service tracking identification is valid; and

an information sending unit 1709, configured to send the service tracking identification containing the updated TTL.

In this embodiment, a unit configured to judge whether the service tracking identification contains a service tracking information upload mode; by uploading the service tracking information in the service tracking information upload mode, the network entity that expects to receive the service tracking information may ultimately receive the service tracking information; the reason for specifying the mode of service tracking information to be uploaded is: the default mode or port of the network entity that expects to receive the service tracking information is occupied, and therefore an upload mode or port that is not occupied should be specified.

As shown in Fig.18, a service tracking system provided in the embodiment of the present invention comprises:

a service requesting device 1801, configured to obtain a service tracking identification, generate a service request message, and send the service tracking identification and the service request message; where,

the service tracking identification obtained by the service may be generated by the service requesting device itself or a service tracking identification sent from an external device (e.g., the O&M controller); and

a network device 1802, configured to receive the service tracking identification and the service request message, and, if it is judged that the service requested by the service request message corresponds to the service tracking identification, record interaction information of the service and upload the service tracking information to the upload address contained in the service tracking identification, the service tracking information containing interaction information.

In actual applications, the service tracking information may be uploaded to one or more among the service requesting device, O&M controller, and mobile tracker, if the service tracking identification is generated by the service requesting device, the service tracking information should be uploaded to the O&M controller, so as to ensure the O&M controller may control the system centrally and ensure system security;

Though the embodiment described here only comprises one network device, there may be a plurality of network devices in actual application; however, the processing procedures are similar, and therefore will not be detailed further here. It can be seen from above description: in this embodiment, as the address where service tracking information is to be uploaded is added in the service tracking identification, the service tracking information may be uploaded to the address contained in the service tracking identification after the service tracking information is obtained; in addition, the address where service tracking information is to be uploaded may be set according to the condition of service tracking; therefore, the service tracking information may be uploaded not only to the O&M controller, the flexibility in service tracking may be improved, and the service tracking information may be managed in a issued manner, so as to facilitate trouble locating and detection.

As shown in Fig.19, another service tracking system provided in the embodiment of the present invention comprises:

an O&M controller 1901, configured to generate a service tracking identification and send the service tracking identification to the service requesting device;

a service requesting device 1902, configured to obtain the service tracking identification, generate a service request message, and send the service tracking identification and the service request message; and

a network device 1903, configured to receive the service tracking identification and the service request message, and, if it is ascertained that the service requested by the service request message meets the condition specified in the service tracking identification, record interaction information of the service and upload the service tracking information to the upload address contained in the service tracking identification, the service tracking information containing interaction information.

Likewise, in actual applications, the service tracking information may be uploaded to one or more among the service requesting device, O&M controller, or authorized mobile tracker.

In this embodiment, after the O&M controller generates the service tracking identification, it sends the service tracking identification to the service requesting device, and thereby instructs the service requesting device to carry out service tracking. Alternatively, in actual applications, the O&M controller may directly send the service tracking identification to the network devices through which the service identified by the service tracking identification may pass; in that case, the processing flow on the network devices is identical to the processing flow mentioned above, and the service requesting doesn't have to receive or send the service tracking identification.

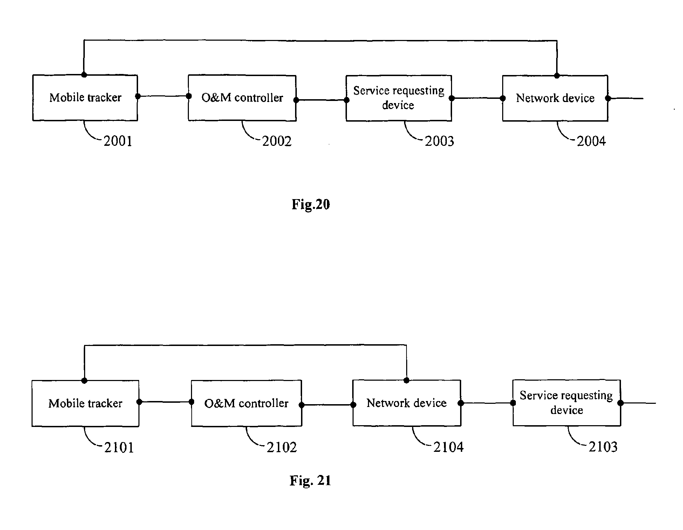

As shown in Fig.20, another service tracking system provided in a third embodiment of the present invention comprises:

a mobile tracker 2001, configured to send the tracking request information;

an O&M controller 2002, configured to receive the tracking request information, generate a service tracking identification after the tracking request information is received, and send the service tracking identification to a service requesting device;

a service requesting device 2003, configured to obtain the service tracking identification, generate a service request message, and send the service tracking identification and the service request message; and

a network device 2004, configured to receive the service tracking identification and the service request message, and, if it is ascertained that the service requested by the service request message meets the condition specified in the service tracking identification, record interaction information of the service and upload the service tracking information to the upload address contained in the service tracking identification, the service tracking information containing the interaction information.

As the entity that keeps track of the service is a mobile tracker, the service tracking information should be uploaded to the mobile tracker; however, in actual applications, the service tracking information may not only be uploaded to the mobile tracker but also to one or more among the service requesting device, O&M controller, and other devices.

In this embodiment, the O&M controller generates a service tracking identification and sets the upload address to contain the address of the mobile tracker when it is triggered by the tracking request information from the mobile tracker, so that the service tracking information may be sent to the mobile tracker and the service network may be expanded.

As shown in Fig.21, another service tracking system provided in a fourth embodiment of the present invention comprises:

a mobile tracker 2101, configured to send the tracking request information;

an O&M controller 2102, configured to receive the tracking request information, generate a service tracking identification after the tracking request information is received, and send the service tracking identification to a network device;

a service requesting device 2103, configured to generate and send the service request message; and

a network device 2104, configured to receive the service tracking identification and the service request message, and, if it is ascertained that the service requested by the service request message meets the condition specified in the service tracking identification, record interaction information of the service and upload the service tracking information to the upload address identified in the service tracking identification, the service tracking information containing the interaction information.

In this embodiment, the service tracking identification is sent from the O&M controller directly to the network device; similarly, the O&M controller generates a service tracking identification and sets the upload address to contain the address of the mobile tracker when it is triggered by the tracking request information from the mobile tracker, so that the service tracking information may be sent to the mobile tracker and the service network may be expanded.

While the service tracking method, network device, O&M controller, and service requesting device provided in embodiments of the present invention have been illustrated and described with reference to some preferred embodiments, the present invention is not limited to these. Those skilled in the art should recognize that various variations and modifications may be made without departing from the spirit and scope of the present invention as defined by the accompanying claims.

## Claims

1. A method for service tracking, comprising:
after receiving a service tracking identification and a service request message, judging whether the service identified by the service tracking identification corresponds to the service requested by a service request message;
recording interaction information of the service identified by the service tracking identification, if the service identified by the service tracking identification corresponds to the service requested by the service request message;
sending the service tracking information to an upload address contained in the service tracking identification, the service tracking information containing the interaction information.

2. The method according to claim 1, further comprising:
before recording interaction information of the service, judging whether Time to Live (TTL) contained in the service tracking identification is valid and, if the TTL is valid, proceeding to the recording interaction information of the service identified by the service tracking identification.

3. The method according to claim 2, further comprising:
after judging that the TTL contained in the service tracking identification is valid,
updating the TTL contained in the service tracking identification; and
sending the updated service tracking identification.

4. The method according to any of claims 1-3, further comprising:
after judging that the service identified by the service tracking identification corresponds to the service requested by the service request message,
judging whether the service tracking identification contains an additional information recording flag and, if the service tracking identification contains the additional information recording flag, recording the additional information when recording the interaction information, the service tracking information containing the additional information.

5. The method according to any of claims 1-3, further comprising:
before uploading the service tracking information to the upload address contained in the service tracking identification,
judging whether the service tracking identification contains a service tracking information upload mode and, if the service tracking identification contains the service tracking information upload mode, uploading the service tracking information to the upload address contained in the service tracking identification in the service tracking information upload mode.

6. The method according to claim 1, wherein, the service tracking identification is generated by an Operation and Maintenance (O&M) controller, and, before the O&M controller generates the service tracking identification, the method further comprising:
receiving tracking request information from a mobile tracker, the tracking request information containing the network address of the mobile tracker;
generating, by the O&M controller, a service tracking identification containing an upload address, the upload address containing the network address of the mobile tracker.

7. The method according to claim 6, further comprising:
after receiving, by the O&M controller, the tracking request information from the mobile tracker,
decrypting the tracking request information with a pre-set key;
judging whether the decrypted tracking request information meets a pre-set specification and, if the decrypted tracking request information meets the pre-set specification, proceeding to the generating, by the O&M controller, a service tracking identification containing an upload address.

8. An Operation and Maintenance (O&M) controller, comprising:
a service tracking identification generating unit, configured to generate a service tracking identification containing an upload address;
a service tracking identification sending unit, configured to send the service tracking identification.

9. The O&M controller according to claim 8, further comprising:
a tracking request information receiving unit, configured to receive tracking request information from a mobile tracker, the tracking request information containing the address of the mobile tracker; wherein,
the service tracking identification generating unit generates the service tracking identification containing an upload address after the tracking request information receiving unit receives the tracking request information from the mobile tracker, the upload address containing the address of the mobile tracker.

10. The O&M controller according to claim 9, further comprising:
a decrypting unit, configured to decrypt the tracking request information with a pre-set key after the tracking request receiving unit receives the tracking request information from the mobile tracker;
a tracking request information judging unit, configured to judge whether the decrypted tracking request information meets the pre-set specification; wherein,
the service tracking identification generating unit generates the service tracking identification containing an upload address if the tracking request information receiving unit judges that the decrypted tracking request information meets the pre-set specification, the upload address containing the address of the mobile tracker.

11. The O&M controller according to any of claims 8-10, further comprising:
a service tracking information receiving unit, configured to receive service tracking information from a network device if the upload address contains the address of the O&M controller.

12. A service requesting device, comprising:
a service tracking identification obtaining unit, configured to receive a service tracking identification from an O&M controller or generate a service tracking identification, the service tracking identification containing an upload address;
a service tracking identification sending unit, configured to send the service tracking identification to the upload address.

13. The service requesting device according to claim 12, further comprising:
a service tracking information receiving unit, configured to receive service tracking information from a network device if the upload address contains the address of the service requesting device.

14. A network device, comprising:
an information receiving unit, configured to receive a service tracking identification and a service request message;
a tracking judging unit, configured to judge whether the service identified by the service tracking identification corresponds to the service requested by the service request message;
an information recording unit, configured to record interaction information of the service if the tracking judging unit judges that the service identified by the service tracking identification corresponds to the service requested by the service request message;
a service tracking information reporting unit, configured to upload service tracking information to an upload address contained in the service tracking identification if the tracking judging unit judges that the service identified by the service tracking identification corresponds to the service requested by the service request message, the service tracking information containing the interaction information.

15. The network device according to claim 14, further comprising:
a Time to Live (TTL) judging unit, configured to judge whether TTL contained in the service tracking identification is valid, if the tracking judging unit judges that the service identified by the service tracking identification corresponds to the service requested by the service request message; wherein,
the information recording unit records interaction information of the service if the TTL judging unit judges that the TTL contained in the service tracking identification is valid.

16. The network device according to claim 15, further comprising:
a TTL updating unit, configured to update the TTL contained in the service tracking identification if the TTL judging unit judges that the TTL contained in the service tracking identification is valid; and
an information sending unit, configured to send a service tracking identification containing the updated TTL.

17. The network device according to any of claims 14-16, further comprising:
an additional information judging unit, configured to judge whether the service tracking identification contains an additional information recording flag; wherein,
the information recording unit is further configured to record the additional information if the additional information judging unit judges that the service tracking identification contains the additional information recording flag; and
the service tracking information uploaded by the service tracking information reporting unit further contains the additional information.

18. The network device according to any of claims 14-16, further comprising:
an upload mode judging unit, configured to judge whether the service tracking identification contains a service tracking information upload mode; wherein,
the service tracking information reporting unit uploads the service tracking information to the upload address contained in the service tracking identification in the service tracking information upload mode if the upload mode judging unit judges that the service tracking identification contains the service tracking information upload mode.

19. A system for service tracking, comprising:
a service requesting device, configured to obtain a service tracking identification, generate a service request message, and send the service tracking identification and the service request message;
a network device, configured to receive the service tracking identification and the service request message, record interaction information of the service and upload service tracking information to an upload address contained in the service tracking identification if the tracking judging unit judges that the service identified by the service tracking identification corresponds to the service requested by the service request message, the service tracking information containing the interaction information.

20. The system according to claim 19, further comprising:
an O&M controller, configured to generate the service tracking identification and send the service tracking identification to the service requesting device.

21. The system according to claim 20, further comprising:
a mobile tracker, configured to send tracking request information; wherein,
the O&M controller is further configured to receive the tracking request information and, after receiving the tracking request information, generate and send the service tracking identification.

22. A system for service tracking, comprising:
an O&M controller, configured to generate and send a service tracking identification;
a service requesting device, configured to generate and send a service request message;
a network device, configured to receive the service tracking identification and the service request message, record interaction information of the service and upload service tracking information to an upload address contained in the service tracking identification if the tracking judging unit judges that the service identified by the service tracking identification corresponds to the service requested by the service request message, the service tracking information containing the interaction information.

23. The system according to claim 22, further comprising:
a mobile tracker, configured to send tracking request information; wherein,
the O&M controller is further configured to receive the tracking request information and, after receiving the tracking request information, generate and send the service tracking identification.
